(19) **Europäisches Patentamt European Patent Office Office européen des brevets**

(11) **EP 2 077 075 A1**

(12) **DEMANDE DE BREVET EUROPEEN**

(43) Date de publication:
**08.07.2009 Bulletin 2009/28**

(51) Int Cl.:
*A01N 59/14* (2006.01)          *A01N 25/04* (2006.01)
*A01P 3/00* (2006.01)

(21) Numéro de dépôt: **07291647.1**

(22) Date de dépôt: **31.12.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK RS**

(71) Demandeurs:
• **REALCO S.A.**
**1348 Louvain-la-Neuve (BE)**

• **TOTAL RAFFINAGE MARKETING**
**92800 Puteaux (FR)**

(72) Inventeur: **La désignation de l'inventeur n'a pas encore été déposée**

(74) Mandataire: **Delcoux, Mariette et al**
**Pecher Consultants SPRL**
**Parc Scientifique Einstein**
**Rue du Bosquet, 7**
**1348 Louvain-la-Neuve (BE)**

(54) **Composition et procédé pour le traitement de la cercosporiose du bananier**

(57) L'invention se rapporte à une composition pour le traitement des maladies cryptogamiques des plantes, à son procédé d'application et son utilisation. En particulier, l'invention se rapporte à une composition utilisée pour le traitement des cercosporioses des bananiers et plantains comportant un composant actif contre la maladie dans une huile minérale. Elle se rapporte également à l'utilisation de l'huile minérale contenue dans la dite composition comme vecteur de transfert du composant actif dans les végétaux pour le traitement des maladies cryptogamiques des plantes et des fruits et/ou d'enzymes.

EP 2 077 075 A1

**Description**

**DOMAINE TECHNIQUE**

L'invention se rapporte à une composition pour le traitement des maladies cryptogamiques des plantes, au procédé de traitement et à l'utilisation de la dite composition à titre préventif et curatif des maladies cryptogamiques. En particulier, l'invention se rapporte au traitement des cercosporioses des bananiers et plantains.

**DESCRIPTION DE L'ETAT DE LA TECHNIQUE**

La cercosporiose noire ou maladie des raies noires du bananier causée par le champignon ascomycète *Mycosphaerella fijiensis* et la cercosporiose jaune causée par le champignon ascomycète *Mycosphaerella musicola* sont les maladies foliaires les plus destructrices de la culture bananière. Les attaques réduisent la photosynthèse, et, si le nombre de feuilles fonctionnelles est insuffisant entre la floraison et la récolte, le régime mûrit sur pied prématurément, privant ainsi le producteur de sa commercialisation.

Le contrôle de la maladie peut être effectué en utilisant divers types de fongicides. Les fongicides de contact agissent lorsqu'ils sont en contact avec le champignon. Les fongicides systémiques doivent être absorbés par la plante pour agir. L'usage de fongicides permet encore de lutter efficacement contre les cercosporioses dans les plantations commerciales, mais leurs effets sur l'environnement sont préoccupants. Bien qu'il soit possible de réduire sensiblement le nombre des traitements si ceux-ci sont pratiqués dans le cadre d'une lutte raisonnée sur avertissement, des souches de *Mycosphaerella fijiensis* et de *M. musicola* ont développé une résistance à la plupart de ces produits dans toutes les régions de production du globe (soit en Amérique Latine, dans les Caraïbes, en Afrique et en Asie).

Ces fongicides systémiques sont en général appliqués en combinaison avec un agent adjuvant qui peut être un composé hydrocarboné, le mélange étant appliqué sous forme d'émulsion par vaporisation sur les feuilles. Ici, le problème des composés hydrocarbonés est celui de la phytotoxicité de ces composés vis-à-vis des végétaux mais également la faculté de ces hydrocarbures à laisser passer suffisamment de lumière pour que le mécanisme de la photosynthèse ne soit pas perturbé.

Le mode d'action de *Mycosphaerella ftjiensis* comprend la production d'une enzyme de dégradation des parois cellulaires végétales, entraînant la dégradation des tissus. Cette dégradation libère le contenu cellulaire, qui sert de substrat au développement du microorganisme, permettant ainsi le développement de la maladie. On connaît par WO 03/073858 un procédé de lutte contre les maladies des végétaux par inhibition des enzymes extracellulaires des microorganismes contaminants. Ce document montre l'efficacité du bore, sous forme d'acide borique, dans l'inhibition des enzymes dégradatives extracellulaires. Cependant, la composition décrite, obtenue sous forme de poudre peu soluble, est appliquée à l'état d'une solution ou d'une suspension aqueuse que l'on pulvérise sur les végétaux ou dans laquelle on les immerge. Cependant, de telles solutions ou suspensions aqueuses ne conviennent donc pas pour l'épandage aérien en solution. De plus, cette composition s'est avérée phytotoxique à l'égard de certains végétaux (courgettes) aux concentrations efficaces. Des tests ont montré en effet que pour obtenir l'effet désiré, des doses de 530 g/ha, au moyen d'une solution à 30g/l d'acide borique, étaient nécessaires, et que ces doses avaient par ailleurs un effet négatif sur le végétal. Enfin, son efficacité à l'égard de la cercosporiose noire n'a pas été prouvée.

On connaît par le document WO 2005/074687 un procédé de traitement de maladies du bananier par application d'un antibiotique polyène, préférentiellement la natamycine. Cet antibiotique est mis en solution aqueuse puis pulvérisé sur les végétaux ou ceux-ci sont baignés dans celle-ci. L'utilisation répétée d'un tel antibiotique présente un risque d'apparition de résistances et est donc un danger pour les écosystèmes.

Il existe donc un besoin d' une composition de traitement des maladies cryptogamiques des plantes, en particulier des cercosporioses, qui soit facile à épandre quel que soit le mode d'épandage par avion ou par système d'aspersion terrestre et qui ne diminue pas les mécanismes de la photosynthèse, qui prolonge la durée d'action du principe actif de la dite composition, qui ne crée pas de résistance, soit efficace à dose réduite, et ne soit pas toxique pour l'utilisateur, le végétal ou pour l'environnement. En particulier, il existe un besoin d'une composition de traitement des maladies cryptogamiques des plantes qui présente l'efficacité de l'acide borique sans en présenter les effets phytotoxiques.

**RESUME DE L' INVENTION**

La présente invention vise à fournir une composition pour le traitement des cercosporioses du bananier qui ne provoque pas de développement de résistance de la part du champignon provoquant la maladie. Elle concerne également le procédé de traitement et l'utilisation de la composition sur les feuilles de la plante en pré-récolte et sur le coussinet des mains de bananes. On entend par coussinet, la cicatrice laissée après la séparation des bananes de la hampe du régime.

Suivant un premier aspect, l'invention se rapporte à une composition de traitement des maladies cryptogamiques des plantes applicable directement sur le végétal, cette composition étant de manière préférée adaptée à la cercosporiose des bananiers et plantains, telle que la cercosporiose noire ou la cercosporiose jaune.

La composition comprend une suspension dans une huile minérale de viscosité variant de 7 à 15 est à 40°C d'un composant actif contre la maladie, comportant un chélate de bore et/ou un complexe de bore. On mesure la viscosité selon la norme NF EN ISO 3104 datée d'août 1996. Cette norme prescrit une méthode de détermination de la viscosité cinématique des produits pétroliers liquides opaques et transparents par mesure du temps d'écoulement d'un volume de produit sous l'action de son propre poids à travers un viscosimètre capillaire en verre et la viscosité dynamique de ce même liquide. Ces mesures sont faites à différentes températures et la mesure est donnée en mm2/s ou centistokes (cst).

La composition comprend de préférence de 0,1 à 50% en volume du composant actif. La composition selon l'invention apparaît comme une bouillie vaporisable qui lorsqu'elle se dépose à la surface des feuilles constitue un film. Ce film du fait de sa viscosité adaptée reste suffisamment longtemps à la surface des végétaux traités, ce qui permet au principe actif qu'il contient de pénétrer dans les végétaux. On a même constaté qu'il favorisait cette pénétration même si l'huile minérale elle-même ne pénétrait pas dans les végétaux. En outre, du fait de cette viscosité adaptée, le film ne constituait pas un filtre diminuant le processus de photosynthèse nécessaire au développement normal des végétaux.

L'huile minérale selon l'invention peut être un mélange d'hydrocarbures issu d'une coupe pétrolière obtenue par distillation (ASTM D1160, 10 mmHg), pour lequel la fourchette de température auxquelles 10%-90% de l'huile se distillent est inférieure ou égale à 50°C et le point de mi-distillation auquel 50% de l'huile se distille est compris entre 170 °C et 240°C. La norme ASTM D1160 prescrit une méthode de distillation sous vide de 10mm de Hg afin d'établir la courbe de distillation des mélanges d'hydrocarbures pétroliers qui soit représentative, répétable et reproductible.

La composition préférée comprendra de 10 à 25% en volume du composant actif dans la composition. L' huile sera choisie dépourvue de dérivés hydrocarbonés aromatiques, de préférence en contiendra moins de 0,1% en poids, ce qui permettra d'utiliser la composition selon l'invention dans tous types d'agriculture y compris l'agriculture biologique selon les normes en vigueur dans chaque pays.

De manière préférée, l'huile minérale est un mélange d'hydrocarbures comprenant plus de 50% en poids de paraffines de 15 à 30 atomes de carbone. Plus particulièrement, elle est composée à plus de 50 % en poids de paraffines comprenant de 19 à 26 atomes de carbone.

Par paraffines, on entend les paraffines normales et les isoparaffines. Dans un mode préféré, l'huile minérale selon l'invention est composée également de plus de 20 % en poids de naphtène.

Dans la composition selon l'invention, le composant actif contre la maladie comporte de préférence un ou plusieurs constituants sélectionnés parmi le groupe constitué par un chélate de bore, un complexe de bore, l'EDTA, les enzymes anti-fongiques, un chitosane et le 4-FPBA (4-formel phenyl boronic acid) et leurs mélanges en suspension dans l'eau ou dans l'huile ou en solution aqueuse.

Un chélate est un complexe organométallique cyclique stable et non ionisé entre un ion métallique (cation) et un agent chélatant (ou chélateur). Le chélate se distingue du simple complexe par le fait que le métal peut se fixer à l'agent chélateur par au moins deux liaisons de coordination, à la manière d'une pince. Grâce à ces liaisons multiples, les chélates sont des complexes particulièrement stables. Un agent chélatant est un réactif organique qui forme des composés de coordination peu solubles et contenant au moins deux groupements fonctionnels. Chacun de ces groupements est capable de se lier à un cation par la mise en commun d'une paire d'électron. Ces groupements forment des cycles à 5 ou 6 atomes.

Le chélate de bore peut être obtenu par une réaction de chélation de l'acide borique avec un agent chélatant choisi parmi l'EDTA, le DTPA, l'EDDHA, l'HEDTA, l'EDDHMA, l'EDDCHA, l'acide nitrilotriacétique, les polyamines, les polyols et leurs mélanges. Les agents chélatants préférés utilisés dans la composition de l'invention pour chélater le bore peuvent être :

- l'acide éthylène diamine tétraacétique : EDTA ($C_{10}H_{16}O_8N_2$)
- l'acide diéthylène triamine pentaacétique : DTPA ($C_{14}H_{23}O_{10}N_3$)
- l'acide éthylène diamine-di(o-hydroxyphényl acétique): EDDHA ($C_{18}H_{20}O_8N_2$)
- l'acide hydroxy-2-éthylène diamine triacétique : HEDTA ($C_{10}H_{18}O_7N_2$)
- l'acide ethyldiamine-di (o-hydroxy-p-methyl phényl) acétique : EDDHMA ($C_{20}H_{24}N_2O_6$)
- l'acide éthylène diamine-di(5-carboxy-2-hydroxyphényl) acétique : EDDCHA ($C_{20}H_{20}O_{10}N_2$)
- l'acide nitrilotriacétique (NTA)
- les polyamines
- les polyols ($C_nH_{2n+2}O_n$) ayant de préférence un indice n de 5 ou 6, et
- les mélanges de ces composés.

L'agent chélatant est avantageusement un polyol, de préférence en C6 ou en C5, de préférence le sorbitol, le mannitol, l'alcool furfurique, ou leurs mélanges.

La composition peut comporter des enzymes anti-fongiques sélectionnés parmi le groupe constitué par les protéases, les carbohydrases, telles que les alpha-amylases, les β-glucenases et les xylanases, et les phospholipases et leurs mélanges.

La composition peut également comporter un chitosane, composé de la distribution aléatoire de D-glucosamine liée par ß-(1-4) (unité désacétylée) et de N-acétyl-D-glucosamine (unité acétylée).

Le chitosane peut être produit par désacétylation chimique (en milieu alcalin) ou enzymatique de la chitine, composant de la carapace (exosquelette) des crustacés et de la paroi des champignons. En particulier, celui des champignons préférés est l'*Agaricus bisporus.*

Le complexe de bore peut être obtenu par une réaction de complexation de l'acide borique avec un agent de complexation choisi parmi les alkanolamines, préférentiellement l'éthanolamine, la méthanolamine, la propanolamine et leurs mélanges.

Les alkanolamines sont des composés de formule générale $OH-\{CH_2\}_n-NH_2$. Dans la présente invention les alkanolamines utilisées sont préférentiellement l'éthanolamine (n=2) ou les alkanolamines ayant un indice n compris entre 1 et 6.

La composition comprend avantageusement de 0,05 g/l à 100 g/l de bore. Les demandeurs ont observé que, de manière inattendue, une telle concentration de bore dans la composition était efficace, sans pour autant être phytotoxique aux doses efficaces. L'apport de bore sous forme chélatée ou complexée permet une meilleure stabilisation du bore dans la plante, une meilleure pénétration du composant actif et de son transport dans la plante.

De manière préférée, la composition suivant l'invention comporte également un surfactant. Ce surfactant peut être choisi parmi les surfactants non ioniques tels que des éthoxylates d'alkylphénol, par exemple des éthoxyiates d'octylphénol, de préférence du Triton X45.

Suivant un autre aspect, l'invention se rapporte à un procédé d'application de la composition selon l'invention pour le traitement des maladies cryptogamiques des plantes et des végétaux, plus particulièrement de la cercosporiose des bananiers et des plantains.

Ce procédé selon l'invention comporte la pulvérisation de la composition sur les feuilles et/ou sur les fruits, ou le trempage du végétal ou de ses fruits dans cette composition.

L'épandage de la dite composition peut se faire par voie aérienne ou terrestre sur les végétaux en pré récolte, ou encore par vaporisation ou trempage sur les parties sensibles à la contamination des végétaux ou des fruits, par exemple sur les coussinets de régimes de bananes en post récolte.

Cette composition et ce procédé selon l'invention peuvent en outre être utilisés aussi bien en agriculture traditionnelle qu'en agriculture biologique, l'huile minérale étant dépourvue de composés aromatiques (inférieur à 0.1% en poids dans la composition) et présentant une écotoxicité acceptable.

Pour permettre de tels épandages, la composition est obtenue par mise en émulsion du composant actif contre la maladie avec l'huile minérale, cette action étant réalisée avant l'épandage.

Un autre objet de l'invention est d'utiliser l'huile minérale contenue dans la dite composition selon l'invention comme vecteur de transfert de composants actifs dans les végétaux pour le traitement des maladies cryptogamiques des plantes et des fruits et/ou d'enzymes.

Ainsi les caractéristiques de l'huile minérale utilisée, notamment sa viscosité et sa faible teneur en hydrocarbures aromatiques en font un élément déterminant dans le traitement de la maladie, car elle favorise l'augmentation du temps de contact entre le composant actif et le végétal malade, elle ne pénètre pas dans le végétal et ne limite pas en faisant écran les phénomènes de photosynthèse nécessaires au développement des végétaux. Ainsi l'huile minérale est choisie parmi les mélanges d'hydrocarbures de viscosité à 40°C variant de 7 à 15 cst et de préférence de 8 à 10 est, comprenant plus de 50% en poids de paraffines de 15 à 30 atomes de carbone et moins de 0,1% en poids d'hydrocarbures aromatiques. Les huiles minérales préférées sont celles contenant plus de 50 % en poids de paraffines comprenant de 19 à 26 atomes de carbone, le taux de naphtènes demeurant supérieur ou égal à 20% en poids.

La viscosité équilibrée de l'huile minérale signifie également une basse volatilité. Sa tension superficielle explique la plus grande persistance de la couche huileuse sur les feuilles. Le phénomène de lavage, qui est responsable de la consommation excessive des fongicides est donc évité. La durée optimale de contact est due à une évaporation homogène associée à un intervalle de distillation étroit (moins de 50 °C). La pénétration rapide du composant actif est facilitée par la teneur paraffinique élevée de l'huile minérale. La structure moléculaire de cette huile minérale permet une dissolution rapide dans la cuticule protégeant les feuilles.

Ses fonctions sont notamment de permettre une répartition uniforme sur la cible (les cigares et les feuilles ouvertes), d'augmenter la durée du contact et la pénétration du composant actif dans la feuille ainsi qu'une meilleure distribution lors de l'application, et de ralentir le développement de la maladie en augmentant la durée d'incubation du champignon. La faible viscosité de cette huile facilite l'application du produit. Un film adhésif est formé sur les feuilles, ce qui permet un bon contact entre le composant actif contenu dans l'adjuvant et le champignon, tout en évitant le lessivage du produit par les pluies ou l'arrosage. Il n'oppose aucun écran limitant les mécanismes de la photosynthèse.

D'autres aspects et avantages de formes d'exécution de l'invention seront discutés avec référence aux figures et à la description détaillée des formes d'exécution préférées.

**BREVE DESCRIPTION DES DESSINS**

La Fig. 1 est une photographie de boîtes de Pétri à l'issue d'un test de six jours de croissance de *Mycosphaerella fijiensis.*

La Fig. 2 représente l'état d'évolution de la maladie (EE) au cours du temps, pour quatre tests effectués dans le champ.

Les Fig. 3 et 4 représentent respectivement la plus jeune feuille nécrosée (PJFN) et la plus jeune feuille à tirets (PJFT) au cours du temps, pour les mêmes quatre tests effectués dans le champ.

**DESCRIPTION DETAILLEE DE L'INVENTION**

Exemple 1

Une première série d'essais a été effectuée en laboratoire pour sélectionner les inhibiteurs d'enzymes extracellulaires utilisables pour cette application. Un test a été réalisé dans des boîtes de Pétri dans le but de suivre le développement du champignon *Mycosphaerella fijensis.* On prépare une composition A contenant 105 g/l de bore complexé par 180 g/l d'une alkanolamine et chélaté par 180 g/l de polyols et une composition B contenant 100 g/l de bore complexé par 360 g/l d'éthanolamine. On prépare par ailleurs une huile minérale constituée de 56 % de paraffines et de 44 % de naphtènes. Cette huile minérale a une viscosité à 40°C de 8.7 cst mesurée suivant la norme NF EN ISO 3104 d'août 1996, et est constituée d'une coupe pétrolière obtenue par distillation, pour laquelle la fourchette de températures auxquelles 10 à 90 % se distillent est de 16°C et le point de mi-distillation auquel 50 % de l'huile se distille est de 197°C.

La composition 1 suivant l'invention comprend 30 % en volume de composition A et 70 % en volume d'huile minérale.

La composition 2 suivant l'invention comprend 30 % en volume de composition B et 70 % en volume d'huile minérale.

Le polyol utilisé est un mélange de polyols à base de sorbitol et de mannitol.

Le test a été effectué dans les conditions suivantes. Dix fragments de mycélium sont transférés dans un tube à essais contenant 10 ml d'eau distillée stérile et agité au vortex pendant une minute pour les fragmenter. 1 ml de cette suspension est prélevé et étalé uniformément dans des boites de Pétri contenant un milieu de culture V8. Les cultures sont maintenues à une température comprise entre 20 et 25°C avec un cycle lumineux 12/12. La préparation du milieu du culture se fait comme suit :

- gar (20g/l) ;
- jus de légume V8 (100 ml/l de jus de légume) ;
- $CaCO_3$ (0,2g/l) ;
- eau déminéralisée (900 ml).

Le milieu est ensuite porté à 80°C à l'aide d'une plaque chauffante de manière à dissoudre l'agar. On laisse refroidir le milieu puis il est porté à pH 6 à l'aide de soude si nécessaire. Le milieu est ensuite autoclavé 20 minutes à 120°C. On ajoute 40 mg/l de streptomycine et 60 mg/l de pénicilline lorsque le milieu a refroidi.

Ce milieu est ensuite stérilisé en autoclave et 15 boîtes sont préparées. Avant l'ajout du milieu de croissance, 1% en volume de la composition 1 selon l'invention est ajouté pour 5 d'entre elles et 1% en volume de la composition 2 selon l'invention est ajouté pour 5 autres d'entre elles. Les 5 dernières sont utilisées comme référence. La croissance du champignon est observée visuellement à 25°C en photopériodes 12/12.

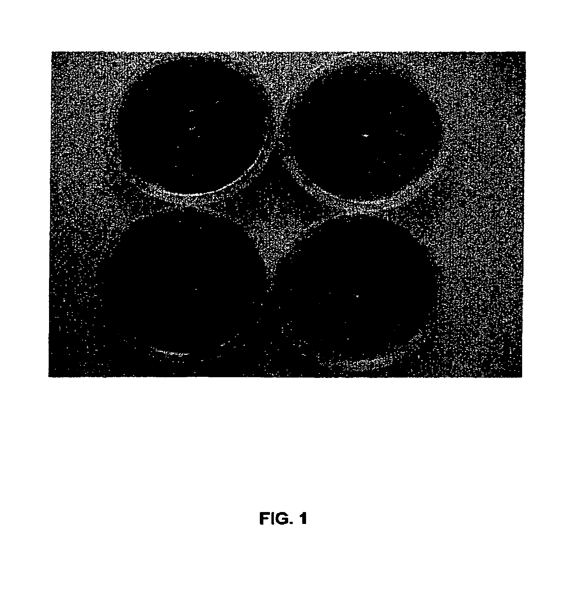

Les résultats des tests sur boites de Pétri sont indiqués à la Fig. 1. A gauche, on observe deux des cinq boîtes de Pétri de référence, et à droite on observe deux des boîtes de Pétri dans lesquelles chacune des compositions 1 et 2 a été ajoutée, après six jours. Dans la boîte au-dessus à droite de la Fig. 1, on a ajouté la composition 1, et dans la boîte en dessous à droite de la Fig.1, on a ajouté la composition 2, Le résultat est clair. Dans les boîtes contenant les inhibiteurs, aucun développement du champignon n'est observé, alors que dans les boîtes de référence, le microorganisme colonise le milieu de culture. La présence de chacune des deux compositions 1 et 2 suivant l'invention prévient donc la croissance de *Mycosphaerella fijiensis* dans le milieu de croissance.

Exemple 2

Des tests en champ ont également été réalisés au Cameroun. Ces tests ont été effectués durant une période de 4 mois, sur une superficie de 0,5 ha, avec 130 bananiers par test. Les traitements ont été appliqués à un rythme de 10 jours d'intervalle. Le cultivar de bananier utilisé est la grande naine (Cavendish, AAA), qui est très sensible à la cercosporiose noire. Ce test a permis de comparer l'action d'une composition de l'invention avec une référence négative (pas de traitement) et deux références positives (deux fongicides classiques). On a utilisé comme références positives le fongicide de contact PENNCOZEB 75 DG (Mancozèbe) : (dithiocarbamate) et le fongicide systémique IMPULSE 800 EC (spiroxamine) (spirocétalamines).

La composition 3 suivant l'invention contient 1% en volume de la composition A de l'exemple 1, soit une composition contenant 105 g/l de bore complexé par 180 g/l d'une alkanolamine et chélaté par 180 g/l de polyols, 98 % en volume d'huile minérale de l'exemple 1 et 1% en volume de Triton X45. L'huile minérale a une viscosité à 40 °C de 8,7 est. Elle est constituée par 56 % de paraffines et 44% de naphtènes.

Traitements appliqués :

- T1 : Non traité ;
- T2 : Référence 1 : PENNCOZEB 75 DG (Mancozèbe) 2kg/ha (1.6 kg m.a./ha) + eau (20l/ha) ;
- T3 : Composition 3 suivant l'invention;
- T4 : Référence 2 : IMPULSE 800 EC (Spiroxamine), 0.4 l ha (320g m.a/ha) +huile minérale (19,6 l/ha)

Les traitements sont appliqués au moyen d'un atomiseur au sol (atomiseur STIHL ou SOLO), à 20 l/ha. La surface totale était de 0,5ha et comportait 805 bananiers, 130 bananiers étant utilisés pour chacun des traitements. Les traitements n'ont pas été répétés, et étaient appliqués de manière aléatoire sur le champ. Dans chacun des groupes, dix plants ont fait l'objet d'une observation détaillée.

Sur les bananiers observés, les valeurs des trois paramètres suivants ont été déterminées chaque semaine :

- l'état d'évolution de la maladie,
- la plus jeune feuille à tirets, et
- la plus jeune feuille nécrosée.

L'état d'évolution de la maladie (EE, ou Disease Development en anglais DD) correspond au niveau d'infestation et est basé sur le nombre total de feuilles, la hauteur du « cigare », le niveau de développement de la maladie pour les feuilles II, III, IV. Calculé suivant l'observation des feuilles : la relation « numéro de feuille » - « stade de la maladie » donne un coefficient comme indiqué dans le tableau ci-après :

Tableau 1

| Stade de la maladie | | feuille numéro | | |
|---|---|---|---|---|
| | | II | III | IV |
| 1 | - | 60 | 40 | 20 |
| | + | 100 | 80 | 60 |
| 2 | - | 100 | 80 | 60 |
| | + | 140 | 120 | 100 |
| 3 | - | 140 | 120 | 100 |
| | + | 180 | 160 | 140 |
| 4 | - | 180 | 160 | 140 |
| | + | 200 | 200 | 180 |
| 5 | - | 220 | 200 | 180 |
| | + | 260 | 240 | 220 |
| 6 | - | 260 | 240 | 220 |
| | + | 300 | 280 | 260 |

L'état d'évolution de la maladie (EE) est donné par l'expression :

$$EE = SEV \times REFi$$

où SEV = SB - CE, où CE est le correctif du stade cigare (feuille en cours de développement) et SB est la somme des coefficients pour chacune des feuilles observées, et.

où REFi est le rythme d'émission foliaire (Foliar Emission Rhythm), c'est-à-dire le nombre de feuilles émises au cours des deux dernières semaines (moyenne effectuée sur les 10 bananiers).

La plus jeune feuille à tiret (PJFT, en anglais Youngest Leaf Attacked YLA) est la plus jeune feuille présentant le stade 1 de la maladie, et la plus jeune feuille nécrosée (PJFN, en anglais Youngest Leaf Spotted YLS) est la plus jeune feuille présentant le stade 5 ou 6 de la maladie. Ces deux derniers paramètres augmentent lorsque les conditions sanitaires dans le champ s'améliorent.

Les tests ont été effectués durant une période de 4 mois. Les traitements ont été effectués de la manière suivante :

Tableau 2

| Traitement | Jours entre deux traitements |
|---|---|
| 1 | 0 |
| 2 | 11 |
| 3 | 14 |
| 4 | 7 |
| 5 | 14 |
| 6 | 8 |
| 7 | 12 |
| 8 | 8 |
| 9 | 9 |
| 10 | 5 |

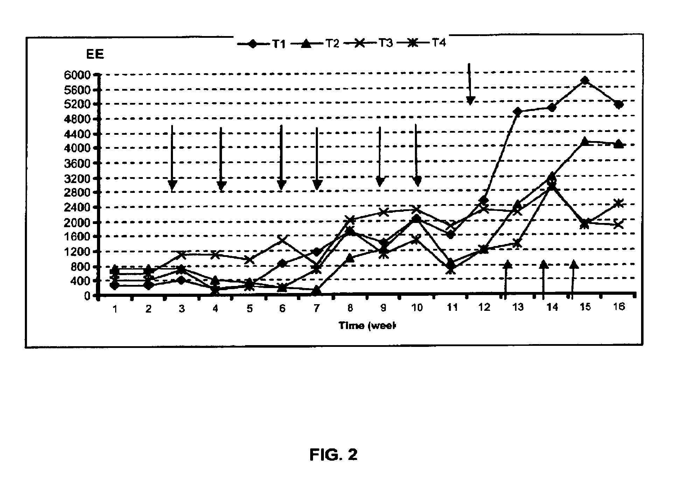

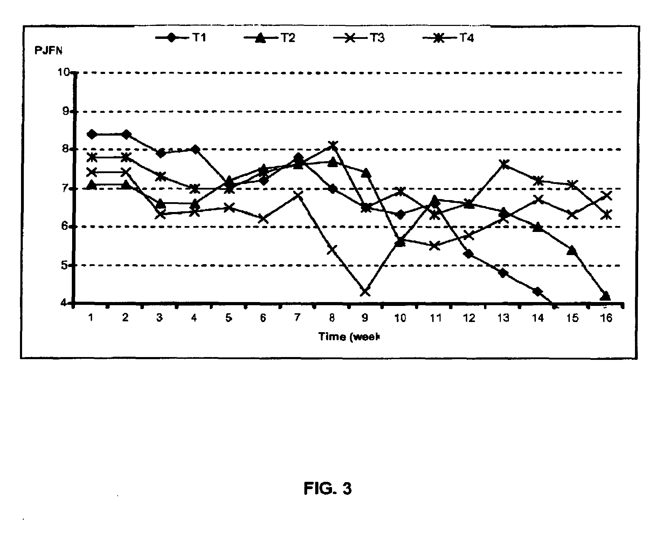

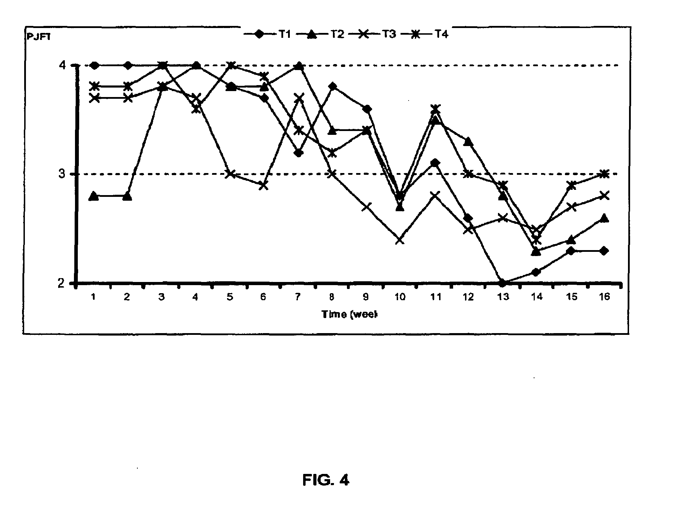

Dans le cas de tests effectués en champ, l'expérimentateur ne maîtrise pas les conditions du test, et ses résultats doivent donc être interprétés à la lumière des conditions effectives du test (conditions climatique, pression de la maladie). Pour ces tests effectués en champ, représentés aux Figs. 2 à 4, les résultats pour les quatre traitements appliqués, T1 à T4, sont très similaires jusqu'à la semaine 7 ou même à la semaine 12 . Ceci est dû à une faible pression de la maladie durant cette période. Les moyennes des résultats collectés au cours de cette première période d'essai ne montrent pas de différence significative entre les traitements. Mais comme les résultats des premières semaines ne montrent aucune tendance, et montrent même la référence négative (T1 - non traité) comme le meilleur traitement au cours des quatre premières semaines, une interprétation complète des résultats est sujette à caution. On a observé que la pression de la maladie a crû à partir de la semaine 12 lorsque le développement de la maladie est devenu significatif. Cette période, au cours de laquelle une forte pression de la maladie a régné, est plus représentative de l'effet des traitements. Des tendances peuvent alors être observées : tant pour le paramètre EE (Fig. 2), que pour les paramètres PJFT et PJFN (Figs. 3 et 4), on observe que les plants traités au moyen de la composition à tester indiquent une réduction du développement de la maladie en comparaison de la référence négative (T1). De plus, la courbe relative au traitement T3 effectué avec la composition 3 suivant l'invention est similaire à celle relative au fongicide systémique IMPULSE + huile minérale (T4) et supérieure à celle du fongicide de contact PENNCOZEB + eau (T2). La composition suivant l'invention constitue donc une alternative aux produits connus, aussi efficace, mais ne présentant pas les inconvénients de ceux-ci.

Cette analyse apparaît plus clairement dans les tableaux qui suivent. Si on observe toute la période couverte par les essais, les différences entre traitements sont faibles, et les résultats observés pour le traitement T3 avec la composition 4 selon l'invention ne sont pas meilleurs. Cependant, si on observe les résultats durant le dernier mois des essais, des différences apparaissent, et les résultats de la composition à tester se rapprochent des observations de la Fig. 2. Le tableau 3 ci-après représente les moyennes des trois paramètres étudiés, (EE, PJFT, PJFN), effectuées sur toute la durée de l'essai.

Tableau 3

| Traitement | EE | PJFN | PJFT |
|---|---|---|---|
| T1 - Référence non traitée | 2410 | 6.1 | 3.1 |

(suite)

| Traitement | EE | PJFN | PJFT |
|---|---|---|---|
| T2 - PENNCOZEB | 1480 | 6.5 | 3.2 |
| T3 - Composition 3 (invention) | 1759 | 6.2 | 3.0 |
| T4 - IMPULSE | 1269 | 7.0 | 3.3 |

Le tableau ci-après représente les moyennes des trois mêmes paramètres étudiés, effectuées pendant le dernier mois des essais On observe une différence significative entre les plants traités et la référence non traitée.

Tableau 4

| Traitement | EE | PJFN | PJFT |
|---|---|---|---|
| T1 - Référence non traitée | 4692 | 4,4 | 2,3 |
| T2 - PENNCOZEB | 2992 | 5,7 | 2,7 |
| T3 - Composition 4 (invention) | 2235 | 6,4 | 2,6 |
| T4 - IMPULSE | 1957 | 7,0 | 2,8 |

Les tests en laboratoire montrent clairement l'applicabilité et le potentiel de l'utilisation d'une formulation selon l'invention pour le contrôle des cercosporioses. En effet, ces tests montrent l'inhibition de l'organisme pathogène *Mycosphaerella fijiensis.* Les résultats des tests en champ montrent un effet par rapport à la référence négative, et des résultats semblables à ceux des fongicides classiques. En outre, les essais relatifs à la formulation selon l'invention ont été effectués dans des parcelles au voisinage d'autres tests incluant une inoculation par *Mycosphaerella fijiensis.* Cette inoculation a pu créer, par contamination aérienne, une pression de la maladie plus importante sur les zones traitées avec la composition 3 suivant l'invention.

Les essais effectués montrent donc une certaine efficacité. Cette efficacité est valorisable car la formulation selon l'invention se présente comme un moyen de lutte alternatif destiné à être intégré dans un programme de lutte complet et non comme un moyen de substitution aux traitements actuels. Elle permet d'apporter une solution nouvelle et de diminuer la pression des traitements fongicides classiques. De plus, elle présente des avantages importants par rapport à ces traitements.

En effet, la formulation selon l'invention limite le développement de la maladie en agissant sur les enzymes extracellulaires produits par les microorganismes pathogènes et non sur le microorganisme lui-même. Ce mode d'action le différencie des fongicides classiques qui agissent en tuant le champignon. L'avantage de cette méthode est qu'elle va permettre d'éviter le développement de résistance des champignons par rapport aux traitements appliqués. Ce développement de résistance est un problème majeur des cultures actuelles et est particulièrement criant pour la culture du bananier. En effet, *Mycosphaerella* a développé des résistances à la quasi-totalité des fongicides existants sur le marché.

Par ailleurs, en plus d'un mode d'application simple et identique aux techniques actuellement utilisées, la formulation selon l'invention présente d'autres avantages importants par rapport aux traitements classiques: l'absence de toxicité pour les utilisateurs et pour l'environnement. La formulation est non toxique, non phytotoxique, biodégradable et sans rémanence dans l'environnement. Elle est entre autre utilisable en agriculture biologique selon les normes européennes. Un traitement des plantes avec cette formulation présente une bien meilleure sécurité pour l'utilisateur et l'environnement par rapport à un fongicide classique.

**Revendications**

1. Composition pour le traitement des maladies cryptogamiques des plantes **caractérisée en ce qu'**elle comprend une suspension dans une huile minérale de viscosité mesurée suivant la norme NF EN ISO 3104 variant de 7 à 15 est à 40°C d'un composant actif comportant un chélate de bore et/ou un complexe de bore.

2. Composition selon la revendication 1 **caractérisée en ce qu'**elle contient de 0,1 à 50% en volume du composant actif.

3. Composition selon la revendication 2 **caractérisée en ce qu'**elle contient de 10 à 25% en volume du composant actif.

4. Composition selon l'une des revendications 1 à 3 **caractérisée en ce que** l'huile minérale est un mélange d'hydrocarbures issu d'une coupe pétrolière obtenue par distillation (ASTM 1160, 10 mmHg), pour lequel la fourchette de température auxquelles 10% à 90% de l'huile se distillent est inférieure ou égale à 50°C et le point de mi-distillation auquel 50% de l'huile se distille est compris entre 170 et 240 °C.

5. Composition selon l'une des revendications 1 à 4 **caractérisée en ce que** l'huile minérale est un mélange d'hydrocarbures comprenant plus de 50% en poids de paraffines de 15 à 30 atomes de carbone et moins de 0,1 % en poids de dérivés hydrocarbonés aromatiques.

6. Composition selon l'une des revendications 1 à 5 **caractérisée en ce que** l'huile minérale est composée de plus de 50 % en poids de paraffines comprenant de 19 à 26 atomes de carbone.

7. Composition selon l'une des revendications 1 à 6 **caractérisée en ce que** l'huile minérale est composée de plus de 20% en poids de naphtène.

8. Composition selon l'une des revendications 1 à 7 **caractérisée en ce que** le composant actif comporte un ou plusieurs constituants sélectionnés parmi le groupe constitué par un chélate de bore, un complexe de bore, l'EDTA, une enzyme anti-fongique, le chitosane, le 4-FPBA et leurs mélanges.

9. Composition selon l'une des revendications 1 à 8 **caractérisée en ce que** la composition comporte de 0,05 à 100 g/l de bore.

10. Composition suivant l'une quelconque des revendications 8 à 9 **caractérisée en ce que** le chélate de bore est susceptible d'être obtenu par une réaction de chélatation de l'acide borique avec un agent chélatant choisi parmi l'EDTA, le DTPA, l'EDDHA, l'HEDTA, l'EDDHMA, l'EDDCHA, l'acide nitrilotriacétique, les polyamines, les polyols et leurs mélanges.

11. Composition suivant la revendication 10 **caractérisée en ce que** l'agent chélatant est un polyol, de préférence en C6 ou en C5, de préférence le sorbitol, le mannitol, l'alcool furfurique, et leurs mélanges.

12. Composition suivant l'une quelconque des revendications précédentes, **caractérisée en ce que** le complexe de bore est susceptible d'être obtenu par une réaction de complexation de l'acide borique avec un agent complexant.

13. Composition suivant la revendication 12 **caractérisée en ce que** l'agent complexant est une alcanolamine choisie préférentiellement parmi l'éthanolamine, la méthanolamine, la propanolamine et leurs mélanges.

14. Composition suivant l'une quelconque des revendications 8 à 13, **caractérisée en ce que** les enzymes anti-fongiques sont sélectionnés parmi le groupe constitué par les protéases, les carbohydrases, telles que les alpha-amylases, les β-glucanases et les xylanases, et les phospholipases et leurs mélanges.

15. Composition suivant l'une quelconque des revendications 1 à 14, **caractérisée en ce que** le chitosane est composé de la distribution aléatoire de D-glucosamine liée par ß-(1-4) (unité désacétylée) et de N-acétyl-D-glucosamine (unité acétylée).

16. Composition suivant l'une quelconque des revendications 1 à 15, **caractérisée en ce qu'**elle comporte un surfactant non ionique.

17. Composition suivant la revendication 16, **caractérisée en ce que** le surfactant non ionique est un éthoxylate d'octylphénol.

18. Procédé d'application sur les végétaux de la composition suivant l'une quelconque des revendications 1 à 17 pour le traitement des maladies cryptogamiques des plantes, plus particulièrement de la cercosporiose des bananiers et plantains.

19. Procédé selon la revendication 18 **caractérisé en ce qu'**il comporte la pulvérisation de la composition sur les feuilles et/ou sur les fruits, ou le trempage du végétal ou de ses fruits dans ladite composition.

20. Procédé selon l'une des revendications 18 à 19 **caractérisé en ce qu'**il comprend l'épandage de ladite composition par voie aérienne ou terrestre sur les végétaux en pré récolte.

**21.** Procédé selon l'une des revendications 18 à 20 **caractérisé qu'**il comprend l'épandage de la dite composition par aspersion ou trempage sur les parties sensibles à la contamination des végétaux ou des fruits en post récolte, plus particulièrement sur les coussinets des mains de bananes.

**22.** Procédé suivant l'une des revendications 18 à 21 **caractérisé en ce que** la composition est obtenue par mise en émulsion du composant actif contre la maladie avec l'huile minérale, cette action étant réalisée avant l'épandage, avec ajout de surfactant.

**23.** Application de la composition selon l'une des revendications de 1 à 17 à l'agriculture biologique.

**24.** Utilisation de l'huile minérale de la composition suivant l'une quelconque des revendications 1 à 17 comme vecteur de transfert du composant actif dans les végétaux pour le traitement des maladies cryptogamiques des plantes et des fruits et/ou d'enzymes.

**25.** Utilisation selon la revendication 24 **caractérisée en ce que** l'huile minérale a une viscosité variant de 7 à 15 est à 40°C mesurée selon la norme NF EN ISO 3104.

**26.** Utilisation selon l'une des revendications 24 et 25 **caractérisée en ce que** l'huile minérale est un mélange d'hydrocarbures comprenant plus de 50% en poids de paraffines de 15 à 30 atomes de carbone.

**27.** Utilisation selon l'une des revendications 24 à 26 **caractérisée en ce que** l'huile minérale contient moins de 0,1% d'hydrocarbures aromatiques.

**28.** Utilisation selon l'une des revendications 24 à 27 **caractérisée en ce que** l'huile minérale de plus de 50 % en poids de paraffines comprenant de 19 à 26 atomes de carbone.

**29.** Utilisation selon l'une des revendications 24 à 28 **caractérisée en ce que** l'huile minérale est composée de plus de 20% en poids de naphtène .

FIG. 1

**FIG. 2**

FIG. 3

FIG. 4

**Office européen des brevets**

## RAPPORT DE RECHERCHE EUROPEENNE

Numéro de la demande

EP 07 29 1647

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| D,A | WO 03/073858 A (REALCO 2001 S A [BE]; LEDENT PHILIPPE [BE]; DEBOIS VALERIE [BE]) 12 septembre 2003 (2003-09-12) * le document en entier * ----- | | INV. A01N59/14 A01N25/04 A01P3/00 |
| X | EP 0 263 706 A (EXXON CHEMICAL PATENTS INC [US]) 13 avril 1988 (1988-04-13) * page 11, ligne 58 - page 12, ligne 11 * * page 12, ligne 46 - ligne 47; revendication 1 * ----- | 1-9,12 | |
| X | EP 0 263 704 A (EXXON CHEMICAL PATENTS INC [US]) 13 avril 1988 (1988-04-13) * page 10, ligne 18 - ligne 36 * * page 11, ligne 6 - ligne 7 * ----- | 1-9,12 | |
| X | EP 0 263 702 A (EXXON CHEMICAL PATENTS INC [US]) 13 avril 1988 (1988-04-13) * page 10, ligne 16 - ligne 34 * * phrase 4 - phrase 5; revendication 1 * ----- | 1-9,12 | |
| | | | **DOMAINES TECHNIQUES RECHERCHES (IPC)** A01N |

Le présent rapport a été établi pour toutes les revendications

| Lieu de la recherche | Date d'achèvement de la recherche | Examinateur |
|---|---|---|
| Munich | 21 mai 2008 | Bertrand, Franck |

EPO FORM 1503 03.82 (P04C02)

**ANNEXE AU RAPPORT DE RECHERCHE EUROPEENNE
RELATIF A LA DEMANDE DE BREVET EUROPEEN NO.**  EP 07 29 1647

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-05-2008

| Document brevet cité au rapport de recherche | | Date de publication | Membre(s) de la famille de brevet(s) | | Date de publication |
|---|---|---|---|---|---|
| WO 03073858 | A | 12-09-2003 | AU | 2003209861 A1 | 16-09-2003 |
| EP 0263706 | A | 13-04-1988 | DE | 3770906 D1 | 25-07-1991 |
| | | | JP | 63178107 A | 22-07-1988 |
| | | | US | 4866140 A | 12-09-1989 |
| EP 0263704 | A | 13-04-1988 | CA | 1303783 C | 16-06-1992 |
| | | | DE | 3770744 D1 | 18-07-1991 |
| | | | JP | 2599600 B2 | 09-04-1997 |
| | | | JP | 63165431 A | 08-07-1988 |
| EP 0263702 | A | 13-04-1988 | DE | 3770905 D1 | 25-07-1991 |
| | | | JP | 63178128 A | 22-07-1988 |
| | | | US | 4866139 A | 12-09-1989 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03073858 A

- WO 2005074687 A